# EUROPÄISCHE PATENTSCHRIFT

(11) **EP 1 088 360 B1**
(45) Veröffentlichungstag und Bekanntmachung des Hinweises auf die Patenterteilung: **05.06.2002**
(21) Anmeldenummer: 99917930.2
(22) Anmeldetag: 31.03.1999
(51) Int. Cl.: H01M 8/10

(54) **BRENNSTOFFZELLE**
FUEL CELL
CELLULE A COMBUSTIBLE

(30) Priorität: 18.05.1998 DE 19821985
(43) Veröffentlichungstag der Anmeldung: 04.04.2001
(73) Patentinhaber: Carl Freudenberg KG, 69469 Weinheim (DE)
(72) Erfinder: BARTH, Thomas, D-64285 Darmstadt (DE); SEVERICH, Birgit, D-64964 Weinheim (DE); KASPER, Klaus, D-77704 Oberkirch (DE)
(86) Internationale Anmeldenummer: EP9902202
(87) Internationale Veröffentlichungsnummer: WO9960649

(56) Entgegenhaltungen:
- DE-A- 3 812 813
- PATENT ABSTRACTS OF JAPAN vol. 096, no. 006, 28. Juni 1996 (1996-06-28) & JP 08 050903 A (MAZDA MOTOR CORP), 20. Februar 1996 (1996-02-20)
- PATENT ABSTRACTS OF JAPAN vol. 017, no. 307 (E-1379), 11. Juni 1993 (1993-06-11) & JP 05 029006 A (HONDA MOTOR CO LTD), 5. Februar 1993 (1993-02-05)
- DATABASE WPI Section EI, Week 9750 Derwent Publications Ltd., London, GB; Class X16, AN 97-542165 XP002113875 & JP 09 259904 A (ISHIKAWAJIMA HARIMA HEAVY IND), 3. Oktober 1997 (1997-10-03)

## Beschreibung

### Technisches Gebiet

Die Erfindung betrifft eine Brennstoffzelle, umfassend zumindest ein Gehäuse, zumindest eine Schicht aus einem protonenleitenden, polymeren Werkstoff, die beiderseits von Katalysatorschichten überdeckt ist, gasdurchlässige Elektroden auf den Katalysatorschichten und bipolare Platten, die die Elektroden in dicht benachbarten Abständen elektrisch leitend berühren und gemeinsam mit den Elektroden gasführende Kanäle begrenzen.

### Stand der Technik

Eine solche Brennstoffzelle ist aus Spektrum der Wissenschaft, Juli 1995, Seite 98, bekannt. Die Kanäle sind dabei parallel zu einander verlaufend in die Bipolarplatten eingeformt. Ihre Herstellung ist dementsprechend aufwendig und teuer. Außerdem ist das hohe Leistungsgewicht der bekannten Brennstoffzelle wenig befriedigend.

### Darstellung der Erfindung

Der Erfindung liegt die Aufgabe zugrunde, eine Brennstoffzelle der eingangs genannten Art bereitzustellen, die technisch einfacher und kostengünstiger herstellbar ist.

Diese Aufgabe wird erfindungsgemäß bei einer Brennstoffzelle der eingangs genannten Art mit den kennzeichnenden Merkmalen von Anspruch 1 gelöst. Auf vorteilhafte Ausgestaltungen nehmen die Unteransprüche Bezug.

Bei der erfindungsgemäßen Brennstoffzelle ist es vorgesehen, daß die erste Schicht oder die zweiten Schichten zur Bildung der Kanäle mit einer Wellung, Plissierung und/oder Tiefprägung versehen ist/sind und daß die jeweils andere Schicht bzw. Schichten eben ausgebildet sind. Die einander gegenüberliegenden Oberflächen der ersten und der zweiten Schichten verlaufen parallel zueinander mit der Folge, daß sich entweder eine Vergrößerung der aktiven Oberfläche ergibt oder eine gegenseitige Überlappung der Profile seitlich benachbarter Kanäle mit der Folge, daß sich je Raumeinheit eine deutliche Steigerung der Leistungsdichte und damit zugleich eine Verbesserung des Leistungsgewichts ergibt. Insbesondere für Anwendungen im mobilen Bereich ist das von großem Vorteil.

Welche der beiden Schichten mit der Wellung, Plissierung und/oder Tiefprägung versehen und welche eben ausgebildet ist, ist im Sinn der Erfindung ohne weitere Bedeutung. Aus technischen Gründen wird jedoch eine Ausführung bevorzugt, bei der die erste Schicht einschließlich der darauf angeordneten Katalysatorschichten und Elektroden eben ausgebildet und die zumeist aus Metall bestehende, zweite Schicht die Wellung, Plissierung und/oder Tiefprägung aufweist. Die Funktionssicherheit solcher Ausführungen ist zumeist höher als bei der anderen Variante.

Der Querschnitt der Brennstoffzelle kann ähnlich gestaltet sein wie bei einer Wellpappe, in der eine gewellte, plissierte oder tiefgeprägte Schicht und eine ebene Schicht abwechselnd aufeinander folgen, bis die erwünschte Gesamtdicke bzw. Gesamtleistung erreicht ist. Die zwischen den einzelnen Schichten auf einander folgenden Kanäle werden während der bestimmungsgemäßen Verwendung abwechselnd von einem Wasserstoff und Sauerstoff enthaltenden Gas durchströmt, das zugleich dazu dienen kann, überschOssige Wärme und das während der chemischen Reaktion entstehende Wasser aus der Brennstoffzelle abzuführen. Zweckmäßig sind dazu zumindest die Kanäle, in denen sich ein Wasserbildung ergibt, während der bestimmungsgemäßen Verwendung vertikal angeordnet und von oben nach unten von dem Gas durchströmt. Bei hinreichend hoher Temperatur der Brennstoffzelle liegt das Wasser gasförmig vor, das heißt in Gestalt von Wasserdampf. Die eigentliche Wasserabscheidung kann in einem solchen Fall außerhalb der Kanäle erfolgen und das verbielbende, unverbrauchte Gas gegebenenfalls temperiert und in einem Kreislauf in die Kanäle zurückgeführt werden. Die übrigen Kanäle verlaufen zweckmäßig parallel zu den "wasserführenden" Kanälen. Sie können aber auch quer zu diesen Kanälen verlaufen.

Bei Ausführungen, bei denen entweder die erste oder die zweite Schicht elastisch komprimierbar und die damit jeweils ein Eingriff gelangende, andere Schicht inkompressibel ausgebildet ist, ergibt sich automatisch eine gute Abdichtung einander benachbarter Kanäle, was es ermöglicht, Herstellungsungenauigkeiten zu kompensieren und einen guten Wirkungsgrad zu erzielen. Wenn die Wellung, Plissierung und/oder Tiefprägung einen Bestandteil der komprimierbaren Schicht bildet, ist die Erzeugung ganz besonders einfach. Sie kann unter Anwendung der in der Textilverarbeitung angewandten Methoden erfolgen, beispielsweise unter Anwendung des Tiefziehens oder von Plissierverfahren. In der Blechverarbeitung sind ähnliche Methoden bekannt. Sie können sinngemäß zur Anwendung gelangen.

Die erste Schicht kann aus einer porösen Folie, einem Gewebe oder Gewirke oder einem Vliesstoff aus Kurz- oder Endlosfasern bestehen und bis zur Sättigung mit perfluoriertem lonomer gefüllt ist, wobei das perfluorierte lonomer ein Polytetrafluorethylen mit sulfonierten Perfluorvinylether-Seitenketten sein kann. Als Alternative bietet es sich an, den Mikrofaservliesstoff mit ein- bis 5-molarer, wässriger Schwefelsäurelösung oder mit konzentrierter Phosphorsäure zu füllen. Des weiteren ist es möglich, hydratisiertes Zirkoniumphosphat und Ammoniumdihydrogenphosphat zu verwenden.

Mit abnehmender Dicke der ersten Schicht läßt sich eine Verbesserung des Wirkungsgrades der Brennstoffzelle erzielen. Unter diesem Gesichtspunkt hat es sich als vorteilhaft bewährt, wenn ein In der ersten Schicht enthaltener Vliesstoff aus Mikrofasern, Filmfibrillen oder Mikrofilamenten besteht Die Verwendung von porösen Folien ist jedoch ebenfalls möglich. Als Werkstoffe haben sich insbesondere PTFE und Polysulfon bewährt.

Bei Verwendung eines Mikrofaser-Vliesstoffs als Protonenleiter ist es vorgesehen, daß dieser mit einem Elektrolyten bis zur Sättigung getränkt ist; wobei der Mikrofaser-Vliesstoff bei Temperaturen bis zu +200 °C sowie unter oxidierenden und reduzierenden Bedingungen chemisch und physikalisch inert gegenüber dem Elektrolyten ist, wobei das Gewicht des Mikrofaser-Vliestoffs 20 bis 200 g/m² beträgt; wobei die Vliesstoffdicke maximal 1 mm beträgt und das Porenvolumen: 65 bis 92 %.

Der mittlere Porenradius des Mikrofaser-Vliesstoffs soll 20 nm bis 10 µm betragen.

Die erste Schicht kann mit den Elektroden unmittelbar zusammenkaschiert sein, beispielsweise durch unmittelbare, gegenseitige Verklebung in einen Abstand voneinander aufweisenden Flächenbereichen. Die Elektroden können dabei aus carbonisierten Fasern aus polymerem Werkstoff bestehen, beispielsweise aus carbonisierten Polyacrylnitril- oder Pechfasem, und bei einer Dicke von weniger als 0,5 mm ein Flächengewicht von 20 bis 100 g/m² haben.

Die zweite Schicht besteht im einfachsten Fall aus einem metallischen Blech von ebener Gestalt. Die während der bestimmungsgemäßen Verwendung in der Brennstoffzelle entstehende Wärme kann ausschließlich oder ergänzend parallel zu dem erzeugten Strom hierüber abgeleitet werden.

Die Kanäle können unabhängig von der spezifischen Ausbildung der ersten und zweiten Schicht zumindest an einem Ende in Durchbrechungen von kammartig ineinander eingreifenden Vorsprüngen des Gehäuses münden, die die mit der Wellung, Plissierung und/oder Tiefprägung versehene Schicht beiderseits dichtend berühren. Hierdurch ist sichergestellt, daß die während der bestimmungsgemäßen Verwendung durch die Brennstoffzelle hindurchgeleiteten Reaktionsgase nur durch Protonenleitung durch die erste Schicht hindurch zur Reaktion gelangen können.

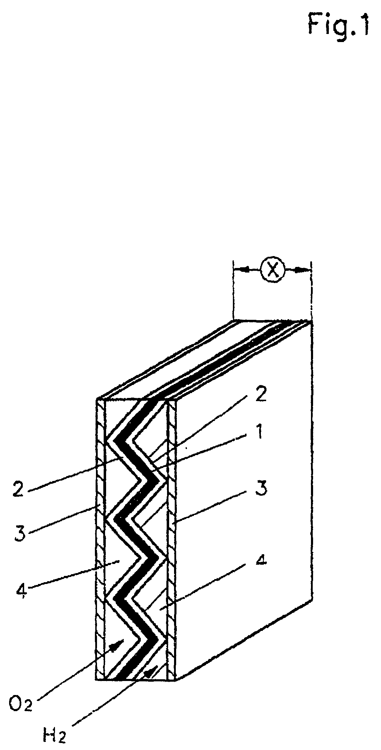

In Fig 1 ist eine beispielhafte Ausführung der Brennstoffzelle wiedergegeben. Diese umfaßt ein nicht dargestelltes Gehäuse, eine erste Schicht 1 aus einem protonenleitenden, polymeren Werkstoff, die beiderseits von Katalysatorschichten überdeckt ist, gasdurchlässige Elektroden 2 auf den Katalysatorschichten und beiderseits der ersten Schicht 1 angeordnete, zweite Schichten 3 In Gestalt elektrisch leitfähiger Platten, die die Elektroden 2 in dicht benachbarten Abständen elektrisch leitend berühren und gemeinsam mit den Elektroden 2 gasführende Kanäle 4 begrenzen, wobei die erste Schicht 1 zur Bildung der Kanäle 4 mit einer Plissierung versehen ist und wobei die zweiten Schichten 3 durch ebene Bleche gebildet sind, die die Faltkanten der auf der ersten Schicht 1 aufliegenden Elektroden 2 anliegend berühren. Während der bestimmungsgemäßen Verwendung werden durch die durch die erste Schicht 1 getrennten Kanäle sauerstoff- bzw. wasserstoffhaltige Gase hindurchgeleitet und nach Reaktion an der Katalisatoroberfläche durch die erste Schicht 1 hindurch miteinander zur Reaktion gebracht. Der dabei entstehende Strom wird über die Elektroden 2 den zweiten Schichten 3 zugeleitet und über diese abgeführt. Die während des chemischen Prozesses freigesetzte Wärme nimmt den gleichen Weg.

Die in der Zeichnung schematisch wiedergegebene Brennstoffzelle zeigt die kleinste, funktionsfähige Einheit. Ihre Stromerzeugung ist maßgeblich abhängig von der Größe der ersten Schicht sowie von dem Querschnitt der Kanäle 4. Sie läßt sich steigern durch Vergrößerung der entsprechenden Werte bzw. durch Parallelschaltung übereinstimmend gestalteter Baueinheiten in einem in sich geschlossenen Paket.

Im einfachsten Falle ist es in der erfindungsgemäßen Brennstoffzelle vorgesehen, daß die erste Schicht zur Bildung der Kanäle mit einer Wellung, Plissierung und/oder Tiefprägung versehen ist und daß die zweiten Schichten 3 eben ausgebildet und durch Bleche gebildet sind. Dabei ist es zweckmäßig, wenn in der ersten Schicht 1 einen Vliesstoff aus Kurz- oder Endlosfasern enthalten ist, um der ersten Schicht 1 die notwendige, mechanische Widerstandsfähigkeit zu verleihen. Der in den Hohlräumen eines solchen Vliesstoffs enthaltene Elektrolyt ist dadurch in mechanischer Hinsicht nicht belastet. Er kann nach Art und Menge optimiert werden in Hinblick auf die Erzielung einer besonders guten, elektrochemischen Wirksamkeit. Die Verwendung einer porösen Folie, in deren Poren ein entsprechender Elektrolyt enthalten ist, ist ebenfalls möglich.

Die Temperaturbeständigkeit der ersten Schicht 1 wird maßgeblich durch die Art des darin enthaltenen Vliesstoffs bzw. der porösen Folie bestimmt. Eine besonders hohe Temperaturbeständigkeit wird erreicht, wenn in der ersten Schicht ein Vliesstoff bzw. eine poröse Folie aus PTFE oder Polysulfon zur Anwendung gelangt. Die Betriebstemperaturen können bei einer solchen Ausbildung 90°C überachreiten, ohne daß es bei einem Betrieb mit reformiertem Methanol im Verlauf von chemischen Nebenreaktionen zur Entstehung von Katalysatorgiften kommt und daß sich eine Beeinträchtigung der Lebensdauer der Brennstoffzelle ergibt. Vliesstoffe aus Mikrofasern haben den Vorteil, daß die Porenstruktur ein extrem großes, anteiliges Volumen einnimmt, ineinander übergehend ausgebildet ist und große Porenanteile aufweist, die in Richtung der Oberflächen von Fasern überdeckt sind. Das unerwünschte Auswaschen des Elektolyten durch das während der bestimmungsgemäßen Verwendung gebildete Wasser wird hierdurch unterdrückt.

Die Schicht aus polymerem Werkstoff kann durch einen mit einem Elektrolyten bis zur Sättigung getränkten Mikrofaservliesstoff oder eine unter Erzeugung von Poren zusammengesinterte oder gereckte Kunststoffolie gebildet sein. Die Fasem bzw. die Folie bestehen dabei aus einem polymeren Werkstoff, der unter den Bedingungen der bestimmungsgemäßen Verwendung chemisch inert ist gegenüber dem Elektrolyten, wobei Temperaturen bis zu +200 °C sowohl unter oxidlerenden wie auch unter reduzierenden Bedingungen auftreten können. Besonders geeignet ist Polytetrafluorethylen zur Herstellung der Schicht.

Die Fasem können endlos ausgebildet und ohne die Verwendung sekundärer Klebstoffe verklebt sein, beispielsweise durch Quellschweißung und/oder eine ineinander übergehende Verschmelzung der Fasern.

Bevorzugt gelangt ein Vliesstoff zur Anwendung mit einer Zugfestigkeit längs/quer von mehr als über 50 MPa, einer Bruchdehnung von 50 bis 100 % und einem E-Modul 2 bis 4 GPa, der bei Umgebungstemperaturen bis zu +200 °C physikalisch beständig ist. Das Vliesstoffgewicht soll 20 bis 200 g/m² betragen bei einer Dicke in mit dem Elektrolyten getränkten Zustand von weniger als ≤ 1 mm, einem mittleren Porenradius von 0,1 bis 10 um und einem Porenvolumen von 65 bis 92 %. Die Dielektrizitätskonstante kann 0,3200 bis 3500 Hz betragen.

Das Vliesstoffgerüst stellt die mechanische Beständigkeit der Membran sicher, so daß der Elektrolyt diese Aufgabe nicht mehr erfüllen muß und somit, allein zur Steuerung der elektrochemischen Vorgänge in der Zelle, In erheblich geringerer Konzentration verwendet zu werden braucht. Hierdurch werden die Materialkosten für die Membran um bis zu 90 % gesenkt, verglichen z. B. mit den Aufwendungen für die Herstellung einer entsprechend dimensionierten, Folie aus perfluoriertem Ionomer.

Die Temperaturbeständigkeit der erfindungsgemäßen Membran wird, wenn dem nicht andere Gründe entgegenstehen, im wesentlichen vom Vliesstoffmaterial bestimmt. Dieser Umstand macht den Einsatz der Membran auch in mit reformiertem Methanol betriebenen Brennstoffzellen möglich; ferner reduziert sich in jedem Falle bei Betriebstemperaturen über 90 °C die Menge der im Verlauf von chemischen Nebenreaktionen entstehenden Katalysatorgifte, was eine höhere Lebensdauer der Zelle zur Folge hat.

Die folgenden Beispiele sollen verdeutlichen, daß die Erfindung in verschiedenen Varianten stets einer reinen Polymermembran aus perfluoriertem lonomer überlegen ist. Allen Beispielen sind Basismaterialien gemeinsam, welche im folgenden beschrieben werden:
Vliesstoffmaterial: Polysulfon-Fasern mit rechteckigem Querschnitt (Breite 6 bis 13 µm, Höhe 1,7 bis 2,4 µm).
Mechanische Eigenschaften des Polysulfon-Materials: Schmelzbereich: 343 bis 399 °C.
Zugfestigkeit: 70 MPa
Bruchdehnung: 50 bis 100 %
E-Modul: 2,4 GPa
Biegetemperatur unter 1,8 MPa Last: 174 °C
Dielektrizitätskonstante: 3100 Hz

Herstellung der Fasern: Verspinnen einer Lösung von Polysulfon in Methylenchlorid im elektrostatischen Feld. Beispielhaft kann dazu eine Vorrichtung gemäß DE-OS 26 20 399 verwendet werden. Die Fasern werden auf einem linear kontinuierlich bewegten, textilen Träger gesammelt.

### Vliesstoff-Eigenschaften:

Gewicht: 150 g/m²
Dicke (komprimiert): 0,05 mm
Dicke (getränkt mit Elektrolyt): 0,25 mm
Mittlere Porenradien im unkomprimierten Zustand: 8 µm
Mittlere Porenradien im komprimierten Zustand: 4 µm
Porenvolumen: 83 %

Die Temperaturbeständigkeit der erfindungsgemäßen Membran wird, wenn dem nicht andere Gründe entgegenstehen, im wesentlichen vom Vliesstoffmaterial bestimmt und endet demzufolge erst bei etwa 174 °C für den reinen Faserwerkstoff Polysulfon. Infolge der mechanischen Verbindung der Fasern im Vliesstoff untereinander erhöht sich die mechanische Stabilität zudem auch bis zu Temperaturen von 250 °C. Somit ist ein Hochtemperatur-Betrieb der Brennstoffzelle möglich, was beispielsweise zur Verringerung der Bildung von Katatysatorgiften von Bedeutung ist.

### Beispiel 1

Der Mikrofaservliesstoff wird mit flüssigem Nafion, einem handelsüblichen, perfluorierten Ionomer der Firma DuPont, in einer Glasfritte von 16 mm Durchmesser überschichtet. Durch Anlegen eines leichten Unterdruckes wird die flüssige Phase in die Porenstruktur des Vliesstoffs gesogen. Zur Entfernung von Lösungsmitteln wird die so getränkte Membran bei 60 °C im Trokkenschrank behandelt. Die Aufbewahrung bis zur Weiterverarbeitung ist danach in destilliertem Wasser möglich.

### Beispiele 2 bis 4:

Der Mikrofaservliesstoff wird mit drei verschieden molaren, wäßrigen Schwefelsäure-Lösungen analog Beispiel 1 getränkt, wobei jedoch zur Herabsetzung der Viskosität die Schwefelsäure auf etwa 70°C erhitzt wird. Ohne ein anderes Ergebnis zu erhalten, kann der Vliesstoff auch in der auf 70 °C erhitzten Säure einige Minuten ausgekocht werden.

Die Aufbewahrung der so erhaltenen Membran erfolgt zweckmäßig in dem entsprechenden Tränkmedium.

Für die auf diese Weise präparierten Membranen wurden mit einer Methode nach DIN 53779 von März 1979 folgende spezifische Leitfähigkeiten ermittelt:

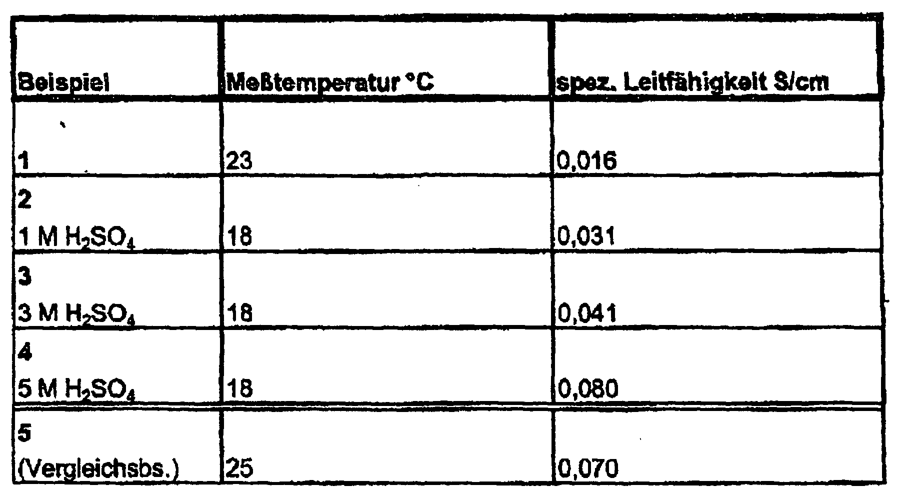

Beispiel 5 in der Tabelle repräsentiert ein Vergleichsbeispiel für entsprechende Messungen an einer 125 µm dicken, selbsttragenden Polymermembran des Standes der Technik aus perfluoriertem Ionomer (Nafion-117, DuPont).

Die Werte für die spezifische Leitfähigkeit S/cm zeigen deutlich, daß mit der erfindungsgemäßen, gegenüber reinern Nafion wesentlich kostengünstigen, konstruktiv einfacheren und mechanisch beständigeren Membran der Betrieb einer Brennstoffzelle mit dem Stand der Technik entsprechenden Leistungen möglich ist.

Im Vergleich zu einer gequollenen Nafion-Membran von beispielsweise 125 µm Dicke sind die in den Beispielen 1 bis 4 verwendeten, mit Elektrolyt getränkten Vliesstoffe doppelt so dick.

Die Leistung der Brennstoffzelle, welche sich aus dem Produkt von Spannung und Stromstärke ergibt, kann nicht nur durch höhere Säurekonzentrationen, d. h. höhere spezifische Leitfähigkeiten S/cm, erreicht werden, sondern auch durch der Diffusionshemmung durch die Verwendung dünnerer Vliesstoffe.

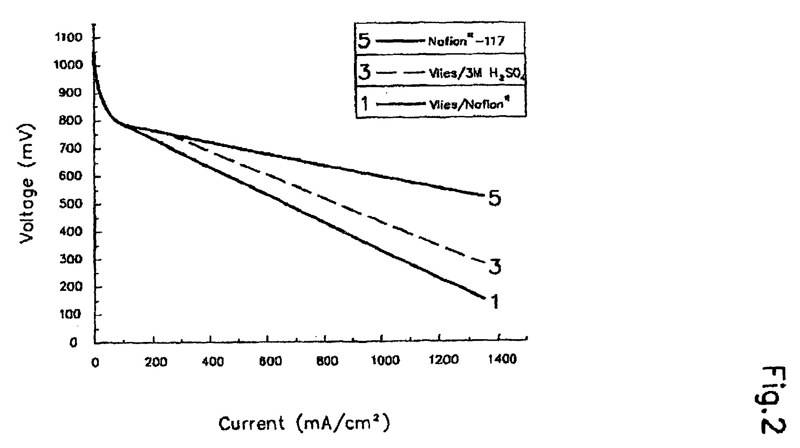

Beispielhaft sind in der Figur 2 die entsprechenden Strom/Spannungskurven bei Raumtemperatur gezeigt, welche den Beispielen 1, 3 und 5 entsprechen. Es ergibt sich, daß, verglichen mit dem Stand der Technik (Beispiel 5), vergleichbare Kurvenverläufe durch die erfindungsgemäßen Membranen erzielt werden. Der oben angesprochene Effekt einer höheren Zellenleistung durch höhere Säurekonzentration beziehungsweise dünnere Vliesstoffmaterialien würde sich bei dieser Darstellung durch eine Verschlebung der Kurven in positiver Richtung der Ordinate auswirken.

## Patentansprüche

1. Brennstoffzelle, umfassend ein Gehäuse, zumindest eine erste Schicht (1) aus einem protonenleitenden Werkstoff, gasdurchlässige Elektroden (2) und beiderseits der ersten Schichten (1) angeordnete, zweite Schichten (3) in Gestalt elektrisch leitfähiger Platten, die Elektroden (2) in dicht benachbarten Abständen elektrisch leitend berühren und gemeinsam mit den Elektroden (2) gasführende Kanäle (4) begrenzen, wobei die jeweils andere Schicht bzw. Schichten eine im wesentlichen eben ausgebildeten Oberfläche aufweisen, wobei die erste Schicht (1) oder die zweiten Schichten (3) zur Bildung der Kanäle (4) mit einer Wellung, Plissierung und/oder Tiefprägung versehen ist/sind, **dadurch gekennzeichnet, dass** die erste Schicht.(1) aus einem polymeren Werkstoff besteht und beiderseits von Katalysatorschichten überdeckt ist, dass die Elektroden auf den Katalysatorschichten angeordnet sind und dass die erste Schicht (1) aus einer porösen Folie, einem Gewebe, einem Gewirke oder einem Vliesstoff aus Kurzoder Endlosfasern besteht und bis zur Sättigung der Poren mit einem Elektrolyten imprägniert ist.

2. Brennstoffzelie nach Anspruch 1, **dadurch gekennzeichnet, dass** de aus einer porösen Folie, einem Gewebe, einem Gewirke oder einem Vliesstoff aus Kurzoder Endlosfasern bestehende erste Schicht (1) gegenüber dem Elektrolyten bis zu einer Temperatur von 200°C chemisch und physikalisch inert ist.

3. Brennstoffzelle nach Anspruch 1 oder 2, **dadurch gekennzeichnet, dass** der Vliesstoff aus Mikrofasern, Filmfibrillen oder Mikrofilamenten besteht.

4. Brennstoffzelle nach einern der Ansprüche 1 bis 3, **dadurch gekennzeichnet, dass** die erste Schicht (1) aus PTFE- oder Polysulfon besteht.

5. Brennstoffzelle nach einem der Ansprüche 1 bis 4, **dadurch gekennzeichnet, dass** die erste Schicht (1) einen mittleren Porenradius von 20 nm bis 10 um aufweist.

6. Brennstoffzelle nach einem der Ansprüche 1 bis 5, **dadurch gekennzeichnet, dass** die erste Schicht (1) mit perfluoriertem lonomer gefüllt ist.

7. Brennstoffzelle nach Anspruch 6, **dadurch gekennzeichnet, dass** das perfluorierte lonomer ein Polytetrafluorethylen mit sulfonierten Perfluorvinylether-Seitenketten ist.

8. Brennstoffzelle nach einem der Ansprüche 1 bis 7, **dadurch gekennzeichnet, dass** der Mikrofaservliesstoff mit ein- bis 5-molarer, wässriger Schwefelsäurelösung getränkt ist.

9. Brennstoffzelle nach einem der Ansprüche 1 bis 7, **dadurch gekennzeichnet, dass** der Mikrofaservliesstoff mit konzentrierter Phosphorsäure gekänkt ist.

10. Brennstoffzelle nach einem der Ansprüche 1 bis 7, **dadurch gekennzeichnet, dass** der Mikrofaservliesstoff mit hydratisiertem Zirkoniumphosphat und Ammoniumdihydrogenphosphat getränkt ist.

11. Brennstoffzeile nach einem der Ansprüche 2 bis 10, **dadurch gekennzeichnet, dass** die erste Schicht (1) ein Flächengewicht von 20 bis 200 g/m², eine Dicke im mit dem Elektrolyten getränkten Zustand von ≤ 1 mm, einen mittleren Porenradius von 0,1 bis 10 µm und ein Porenvolumen von 65 bis 92 % aufweist.

12. Brennstoffzelle nach einem der Ansprüche 1 bis 11, **dadurch gekennzeichnet, dass** die erste Schicht (1) mit den Elektroden (2) zusammenkaschiert ist.

13. Brennstoffzelle nach Anspruch 12, **dadurch gekennzeichnet, dass** die Elektroden (2) und die erste Schicht (1) in einen Abstand aufweisenden Flächenbereichen miteinander verklebt sind.

14. Brennstoffzelle nach einem der Ansprüche 1 bis 13, **dadurch gekennzeichnet, dass** die Elektroden (2) aus carbonisierten Fasern aus polymerem Werkstoff bestehen.

15. Brennstoffzelle nach einem der Ansprüche 12 bis 14, **dadurch gekennzeichnet, dass** die Elektroden (2) bei einer Dicke von weniger als 0,5 mm ein Flächengewicht von 20 bis 100 g/m² haben.

16. Brennstoffzelle nach einem der Ansprüche 1 bis 15, **dadurch gekennzeichnet, dass** die zweite Schicht (3) aus Blech besteht.

17. Brennstoffzelle nach einem der Ansprüche 1 bis 16, **dadurch gekennzeichnet, dass** die Kanäle (4) im Gegenstromprinzip durchströmt sind.

18. Brennstoffzelle nach einem der Ansprüche 1 bis 17, **dadurch gekennzeichnet, dass** die Kanäle (4) an zumindest einem Ende in Durchbrechungen von kammartig ineinandergreifenden Vorsprüngen des Gehäuses münden, die die mit der Wellung, Plissierung und/oder Tiefprägung versehene Schicht (1,3) beiderseits dichtend anliegend berühren.

## Claims

1. A fuel cell comprising a housing, at least one first layer (1) of a proton-conducting material, gas-pervious electrodes (2) and, disposed on both sides of said first layers (1), second layers (3) in the shape of electrically conductive plates which touch said electrodes (2) electro-conductingly at closely spaced intervals and together with said electrodes (2) bound gasducting channels (4), the respectively other layer or layers having a substantially planar surface and said first layer (1) or said second layers (3) having been provided with a corrugation, pleating and/or deep embossing to form said channels (4), **characterized in that** said first layer (1) is composed of a polymeric material and is covered on both sides by catalyst layers, **in that** said electrodes are disposed on said catalyst layers and **in that** said first layer (1) is composed of a porous film, a woven fabric, a loop-formingly knitted fabric or a nonwoven fabric composed of short or continuous fibres and is poresaturatingly impregnated with an electrolyte.

2. A fuel cell according to claim 1, **characterized in that** said first layer (1) composed of a porous film, a woven fabric, a loop-formingly knitted fabric or a nonwoven fabric composed of short or continuous fibres is chemically and physically inert towards said electrolyte at up to 200°C.

3. A fuel cell according to claim 1 or 2, **characterized in that** said nonwoven fabric is composed of microfibres, film fibrils or microfilaments.

4. A fuel cell according to any one of claims 1 to 3, **characterized in that** said first layer (1) comprises PTFE or polysulphone.

5. A fuel cell according to any one of claims 1 to 4, **characterized in that** said first layer (1) has an average pore radius of from 20 nm to 10 µm.

6. A fuel cell according to any one of claims 1 to 5, **characterized in that** said first layer (1) is filled with perfluorinated ionomer.

7. A fuel cell according to claim 6, **characterized in that** said perfluorinated ionomer is a polytetrafluoroethylene having sulphonated perfluorovinyl ether side chains.

8. A fuel cell according to any one of claims 1 to 7, **characterized in that** said microfibre nonwoven fabric is saturated with from 1 to 5 molar aqueous sulphuric acid solution.

9. A fuel cell according to any one of claims 1 to 7, **characterized in that** said microfibre nonwoven fabric is saturated with concentrated phosphoric acid.

10. A fuel cell according to any one of claims 1 to 7, **characterized in that** said microfibre nonwoven fabric is saturated with hydrated zirconium phosphate and ammonium dihydrogenphosphate.

11. A fuel cell according to any one of claims 2 to 10, **characterized in that** said first layer (1) has a basis weight of from 20 to 200 g/m², a thickness of ≤1 mm in the electrolyte-saturated state, an average pore radius of from 0.1 to 10 µm and a pore volume of from 65 to 92%.

12. A fuel cell according to any one of claims 1 to 11, **characterized in that** said first layer (1) is laminated together with said electrodes (2).

13. A fuel cell according to claim 12, **characterized in that** said electrodes (2) and said first layer (1) are mutually adhered in spaced apart surface regions.

14. A fuel cell according to any one of claims 1 to 13, **characterized in that** said electrodes (2) are composed of carbonized fibres of polymeric material.

15. A fuel cell according to any one of claims 12 to 14, **characterized in that** said electrodes (2) are less than 0.5 mm in thickness and have a basis weight of from 20 to 100 g/m².

16. A fuel cell according to any one of claims 1 to 15, **characterized in that** said second layer (3) comprises sheet metal.

17. A fuel cell according to any one of claims 1 to 16, **characterized in that** said channels (4) duct countercurrently.

18. A fuel cell according to any one of claims 1 to 17, **characterized in that** said channels (4) terminate at either or both ends in openings through combingly intermeshing promontories of the housing which touch said corrugated, pleated and/or deep-embossed layer (1,3) sealingly on both sides.

## Revendications

1. Cellule à combustible, comprenant un boîtier, au moins une première couche (1) en matière à conduction protonique, des électrodes perméables aux gaz (2) et, disposées des deux côtés des premières couches (1), des deuxièmes couches (3) en forme de plaques électriquement conductrices qui touchent de façon conductrice électriquement les électrodes (2) dans des écarts étroitement contigus et limitent en commun avec les électrodes (2) des canaux (4) conduisant le gaz, à chaque fois l'autre couche resp. les autres couches présentant une surface essentiellement conçue plane, la première couche (1) ou les deuxièmes couches (3) étant dotée(s) pour la formation des canaux (4) d'un état ondulé, d'un plissage et-/-ou d'un estampage profond, **caractérisée en ce que** la première couche (1) est composée d'une matière polymère et est recouverte des deux côtés de couches de catalyseur, **en ce que** les électrodes sont disposées sur les couches de catalyseur et **en ce que** la première couche (1) est composée d'une feuille poreuse, d'un tissu, d'un tissu à mailles ou d'une étoffe de nappe de fibres à fibres courtes ou filaments et est imprégnée d'un électrolyte jusqu'à saturation des pores.

2. Cellule à combustible selon la revendication 1, **caractérisée en ce que** la première couche (1) composée d'une feuille poreuse, d'un tissu, d'un tissu à mailles ou d'une étoffe de nappe de fibres à fibres courtes ou filaments est inerte chimiquement et physiquement par rapport à l'électrolyte jusqu'à une température de 200°C.

3. Cellule à combustible selon la revendication 1 ou 2, **caractérisée en ce que** l'étoffe de nappe de fibres est composée de microfibres, de fibrilles de film ou de microfilaments.

4. Cellule à combustible selon l'une des revendications 1 à 3, **caractérisée en ce que** la première couche (1) est composée de PTFE ou de polysulfone.

5. Cellule à combustible selon l'une des revendications 1 à 4, **caractérisée en ce que** la première couche (1) présente un rayon poreux moyen de 20 nm à 10 µm.

6. Cellule à combustible selon l'une des revendications 1 à 5, **caractérisée en ce que** la première couche (1) est remplie d'un ionomère perfluoré.

7. Cellule à combustible selon la revendication 6, **caractérisée en ce que** l'ionomère perfluoré est un polytétrafluoroéthylène avec des chaînes latérales de vinyl-éther perfluorique sulfoné.

8. Cellule à combustible selon l'une des revendications 1 à 7, **caractérisée en ce que** la nappe de fibres en micro-fibres est imbibée d'une solution d'acide sulfurique aqueuse de un à 5 molaires.

9. Cellule à combustible selon l'une des revendications 1 à 7, **caractérisée en ce que** la nappe de fibres en micro-fibres est imbibée d'acide phosphorique concentré.

10. Cellule à combustible selon l'une des revendications 1 à 7, **caractérisée en ce que** la nappe de fibres en micro-fibres est imbibée de zirconiumphosphate hydraté et de phosphate dihydrogéné d'ammonium.

11. Cellule à combustible selon l'une des revendications 2 à 10, **caractérisée en ce que** la première couche (1) présente un poids de surface de 20 à 200 g/m², une épaisseur dans l'état imbibé avec l'électrolyte ≤ 1 mm, un rayon de pore moyen de 0,1 à 10 µm et un volume des pores de 65 à 92 %.

12. Cellule à combustible selon l'une des revendications 1 à 11, **caractérisée en ce que** la première couche (1) est contre-collée avec les électrodes (2).

13. Cellule à combustible selon la revendication 12, **caractérisée en ce que** les électrodes (2) et la première couche (1) sont collées ensemble dans des zones de surface présentant un écartement.

14. Cellule à combustible selon l'une des revendications 1 à 13, **caractérisée en ce que** les électrodes (2) sont composées de fibres carbonisées en matière polymère.

15. Cellule à combustible selon l'une des revendications 12 à 14, **caractérisée en ce que** les électrodes (12) avec une épaisseur inférieure à 0,5 mm ont un poids de surface de 20 à 100 g/m².

16. Cellule à combustible selon l'une des revendications 1 à 15, **caractérisée en ce que** la deuxième couche (3) est composée de tôle.

17. Cellule à combustible selon l'une des revendications 1 à 16, **caractérisée en ce que** les canaux (4) sont traversés selon le principe de contre-courant.

18. Cellule à combustible selon l'une des revendications 1 à 17, **caractérisée en ce que** les canaux (4) débouchent à au moins une extrémité dans des découpures de parties en saillie s'engrenant à la manière d'un peigne du boîtier, qui touchent en se mettant de façon étanche des deux côtés la couche (1, 3) dotée de l'ondulation, du plissage et-/-ou de l'estampage profond.
